# DEMANDE DE BREVET EUROPEEN

(11) **EP 4 492 622 A1**
(43) Date de publication de la demande: **15.01.2025**
(21) Numéro de dépôt: 24188150.7
(22) Date de dépôt: 11.07.2024
(51) Int. Cl.: H02J 7/00, E06B 9/68, H02J 7/35

(54) **PROCÉDÉ DE DIAGNOSTIC D'UN DISPOSITIF D ENTRAÎNEMENT MOTORISÉ POUR UN DISPOSITIF D OCCULTATION D'UNE INSTALLATION DE FERMETURE, D OCCULTATION OU DE PROTECTION SOLAIRE**

(30) Priorité: 12.07.2023 FR 2307490
(71) Demandeur: Somfy Activites SA, 74300 Cluses (FR)
(72) Inventeur: BOSSE, Ben, 74300 CLUSES (FR)
(74) Mandataire: Novaimo

(57) **Abrégé**

Procédé de diagnostic d'un dispositif d'entraînement motorisé (5) pour un dispositif d'occultation (3) d'une installation (100) de fermeture, d'occultation ou de protection solaire, le dispositif d'entraînement motorisé (5) comprenant un actionneur électromécanique (11) et un dispositif d'alimentation en énergie électrique (26) incluant une batterie (24) et un panneau photovoltaïque (25), le procédé de diagnostic comprenant :
- une étape (S100) de comptage de l'énergie électrique produite par le panneau photovoltaïque (25) pendant une période élémentaire, cette étape étant itérée sur plusieurs périodes élémentaires successives, et
- une étape (S200) de détermination de l'énergie électrique produite par le panneau photovoltaïque (25) durant une période cible glissante constituée par une succession de périodes élémentaires.

## Description

La présente invention concerne un procédé de diagnostic d'un dispositif d'entraînement motorisé pour un dispositif d'occultation d'une installation de fermeture, d'occultation ou de protection solaire, ainsi qu'un dispositif d'entraînement motorisé adapté à mettre en oeuvre ce procédé de diagnostic.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

Il est connu d'utiliser un dispositif d'entraînement motorisé comprenant un actionneur électromécanique et un dispositif d'alimentation en énergie électrique incluant une batterie et un panneau photovoltaïque. Dans une telle solution, le panneau photovoltaïque est utilisé pour recharger la batterie afin que celle-ci soit toujours suffisamment chargée pour alimenter l'actionneur électromagnétique.

Lorsqu'il apparaît, de manière répétée, des situations dans lesquelles la batterie ne contient pas assez d'énergie pour alimenter l'actionneur électromécanique, il existe un problème dans l'installation. Les panneaux photovoltaïques et les batteries sont des composants qui se dégradent avec le temps. En conséquence, dans une situation de dysfonctionnement, les installateurs peuvent être enclins à remplacer le panneau photovoltaïque et/ou la batterie. Toutefois, l'origine du dysfonctionnement peut se trouver ailleurs dans l'installation. Notamment, le dysfonctionnement peut avoir pour origine :
- une évolution de l'environnement de l'installation (implantation d'un nouveau bâtiment, implantation de nouvelle végétation, croissance/développement d'une végétation existante) ayant pour conséquence de bloquer une plus grande proportion des rayons solaires dirigés vers le panneau photovoltaïque, et/ou
- un encrassement du panneau photovoltaïque, et/ou
- une augmentation de la résistance au déplacement du dispositif d'occultation due par exemple à encrassement ou à un vieillissement du guidage de celui-ci.

Dans de telles circonstances, une action de remplacement du panneau photovoltaïque et/ou de la batterie est sans effet et d'autres actions doivent être mises en oeuvre pour résoudre le problème.

La présente invention a pour but de remédier aux inconvénients précités et de proposer un procédé de diagnostic améliorant la situation. En particulier, l'invention propose un procédé de diagnostic qui permet de déterminer l'état du panneau photovoltaïque.

Selon l'invention, le procédé permet le diagnostic d'un dispositif d'entraînement motorisé pour un dispositif d'occultation d'une installation de fermeture, d'occultation ou de protection solaire, le dispositif d'entraînement motorisé comprenant un actionneur électromécanique et un dispositif d'alimentation en énergie électrique incluant une batterie et un panneau photovoltaïque. Le procédé de diagnostic comprend :
- une étape de comptage de l'énergie électrique produite par le panneau photovoltaïque pendant une période élémentaire, cette étape étant itérée sur plusieurs périodes élémentaires successives, et
- une étape de détermination de l'énergie électrique produite par le panneau photovoltaïque durant une période cible glissante constituée par une succession de périodes élémentaires.

Le procédé peut comprendre une première étape de comparaison de l'énergie électrique produite par le panneau photovoltaïque durant la période cible, notamment une première étape de comparaison de l'énergie électrique produite par le panneau photovoltaïque durant la période cible à une consommation théorique du dispositif d'entraînement motorisé, en particulier une première étape de comparaison de l'énergie électrique produite par le panneau photovoltaïque durant la période cible à une consommation théorique du dispositif d'entraînement motorisé durant la période cible.

Le procédé peut comprendre, en fonction du résultat de la première étape de comparaison, une communication, notamment un affichage, d'une information de production d'énergie électrique.

Le procédé peut comprendre :
- une étape de comptage de l'énergie électrique consommée par le dispositif d'entraînement motorisé durant la période cible, et
- une étape de détermination de l'énergie électrique consommée par le dispositif d'entraînement motorisé durant la période cible.

Le procédé peut comprendre une deuxième étape de comparaison de l'énergie électrique produite par le panneau photovoltaïque durant la période cible à l'énergie électrique consommée par le dispositif d'entraînement motorisé durant la période cible.

Le procédé peut comprendre, en fonction du résultat de la deuxième étape de comparaison, une communication, notamment un affichage, d'un indicateur de bilan d'énergie et/ou d'une recommandation d'action pour améliorer l'indicateur de bilan.

La période cible peut avoir :
- une durée courte, comprise entre 3 et 9 jours, par exemple une période d'environ 5 jours, ou
- une durée intermédiaire, comprise entre 10 jours et 31 jours, par exemple une période d'environ 25 jours, ou
- une durée importante, comprise entre 32 et 100 jours, par exemple d'environ 80 jours.

Le procédé peut comprendre une étape d'analyse combinée d'au moins deux résultats de la deuxième étape de comparaison pour différentes périodes cibles de durée courte, intermédiaire et/ou importante.

Selon l'invention, le dispositif d'entraînement motorisé pour un dispositif d'occultation d'une installation de fermeture, d'occultation ou de protection solaire, comprend des éléments matériels et/ou logiciels mettant en oeuvre le procédé défini précédemment, notamment des éléments matériels et/ou logiciels conçus pour mettre en oeuvre le procédé défini précédemment.

Selon l'invention, le dispositif d'entraînement motorisé pour un dispositif d'occultation d'une installation de fermeture, d'occultation ou de protection solaire comprend des moyens de mettre en oeuvre le procédé défini précédemment.

Selon l'invention, le produit programme d'ordinateur comprend des instructions de code de programme enregistrées sur un support lisible par ordinateur pour mettre en oeuvre les étapes du procédé défini précédemment lorsque ledit programme fonctionne sur un ordinateur.

Selon l'invention, le produit programme d'ordinateur téléchargeable depuis un réseau de communication et/ou enregistré sur un support de données lisible par un ordinateur et/ou exécutable par un ordinateur, est caractérisé en ce qu'il comprend des instructions qui, lorsque le programme est exécuté par l'ordinateur, conduisent celui-ci à mettre en oeuvre le procédé défini précédemment.

Selon l'invention, le support d'enregistrement de données, lisible par un ordinateur, sur lequel est enregistré un programme d'ordinateur comprenant des instructions de code de programme de mise en oeuvre du procédé défini précédemment.

Selon l'invention, le support d'enregistrement lisible par ordinateur comprenant des instructions qui, lorsqu'elles sont exécutées par un ordinateur, conduisent celui-ci à mettre en oeuvre le procédé défini précédemment.

L'invention porte aussi sur un signal d'un support de données, portant le produit programme d'ordinateur défini précédemment.

D'autres particularités et avantages de l'invention apparaîtront encore dans la description ci-après, faite en référence aux dessins annexés, donnés à titre d'exemples non limitatifs et dans lesquels :
la figure 1 est une vue schématique en coupe transversale d'une installation conforme à un mode de réalisation de l'invention ;
la figure 2 est une vue schématique en perspective de l'installation illustrée à la figure 1 ;
la figure 3 est une vue schématique en coupe axiale et partielle de l'installation illustrée aux figures 1 et 2, montrant un actionneur électromécanique de l'installation ;
la figure 4 est un ordinogramme d'une première partie d'un mode d'exécution d'un procédé de diagnostic d'un dispositif d'entraînement motorisé d'un dispositif d'occultation pour l'installation illustrée aux figures 1 à 3 ;
la figure 5 est un ordinogramme d'une deuxième partie d'une première variante du mode d'exécution du procédé de diagnostic ;
la figure 6 est un ordinogramme d'une deuxième partie d'une deuxième variante du mode d'exécution du procédé de diagnostic ;
la figure 7 est un ordinogramme d'une procédure de la première variante ; et
la figure 8 est un ordinogramme d'une procédure de la deuxième variante.

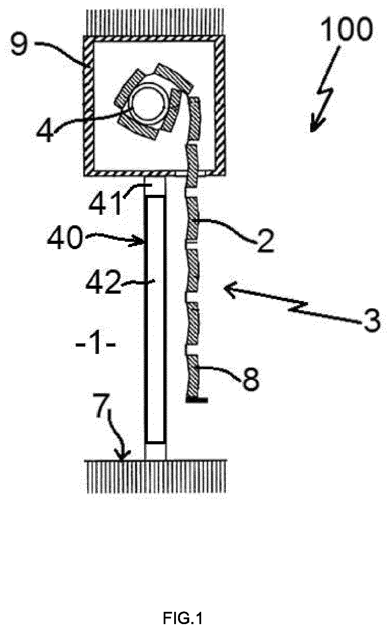

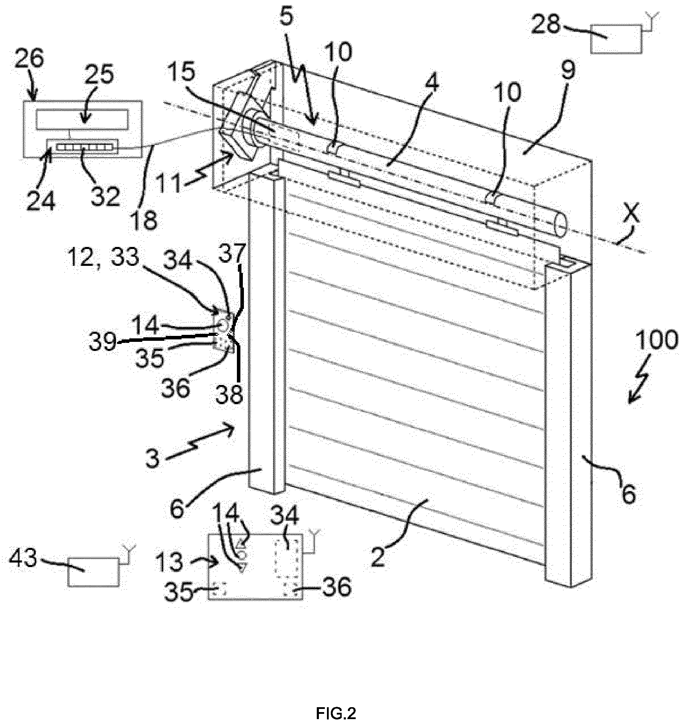

On décrit tout d'abord, en référence aux figures 1 et 2, une installation 100 comprenant un dispositif de fermeture, d'occultation ou de protection solaire 3 conforme à un mode de réalisation de l'invention. Cette installation 100, installée dans un bâtiment, non représenté, comporte une ouverture 1, dans laquelle est disposée une fenêtre 40 ou une porte, non représentée. Cette installation 100 est équipée d'un écran 2 appartenant au dispositif de fermeture, d'occultation ou de protection solaire 3, en particulier un volet roulant motorisé.

Ici, l'installation 100 comprend la fenêtre 40.

La fenêtre 40 comprend au moins un cadre dormant 41 et au moins une vitre 42. La vitre 42 est disposée à l'intérieur du cadre dormant 41, en particulier dans une configuration assemblée de la fenêtre 40.

Avantageusement, la fenêtre 40 peut, en outre, comprendre au moins un ouvrant, non représenté.

Avantageusement, la vitre 42 peut être soit montée dans le cadre dormant 41, dans le cas où celle-ci est fixe par rapport au cadre dormant 41, soit montée dans un cadre de l'ouvrant, dans le cas où celle-ci est mobile par rapport au cadre dormant 41, en particulier selon un mouvement de rotation, notamment dans le cas d'une fenêtre oscillante ou battante, ou selon un mouvement de translation, notamment dans le cas d'une fenêtre coulissante selon une direction horizontale ou verticale, ou selon deux mouvements de rotation, notamment dans le cas d'une fenêtre oscillo-battante.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut être un volet roulant, un store en toile ou avec des lames orientables, un portail roulant, une grille, une porte ou encore un volet battant. La présente invention s'applique à tous les types de dispositif d'occultation.

Ici, l'installation 100 comprend le dispositif d'occultation 3.

On décrit, en référence aux figures 1 et 2, un volet roulant conforme à un mode de réalisation de l'invention.

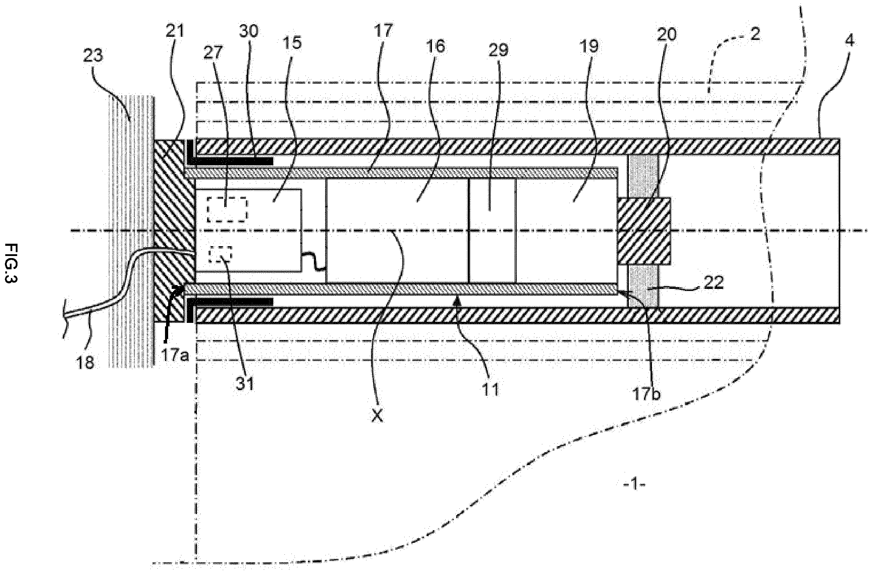

Le dispositif d'occultation 3 comprend un dispositif d'entraînement motorisé 5. Le dispositif d'entraînement motorisé 5 comprend au moins un actionneur électromécanique 11 illustré à la figure 3.

Avantageusement, le dispositif d'occultation 3 comprend, en outre, un tube d'enroulement 4. L'écran 2 est enroulable sur le tube d'enroulement 4. En outre, le tube d'enroulement 4 est agencé de sorte à être entraîné en rotation par l'actionneur électromécanique 11.

Ainsi, l'écran 2 du dispositif d'occultation 3 est enroulé sur le tube d'enroulement 4 ou déroulé autour de celui-ci, le tube d'enroulement 4 étant entraîné par le dispositif d'entraînement motorisé 5, en particulier par l'actionneur électromécanique 11.

De cette manière, l'écran 2 est mobile entre une position enroulée, en particulier haute, et une position déroulée, en particulier basse, et inversement.

L'écran 2 du dispositif d'occultation 3 est un écran de fermeture, d'occultation et/ou de protection solaire, s'enroulant et se déroulant autour du tube d'enroulement 4, dont le diamètre intérieur est supérieur au diamètre externe de l'actionneur électromécanique 11, de sorte que l'actionneur électromécanique 11 peut être inséré dans le tube d'enroulement 4, lors de l'assemblage du dispositif d'occultation 3.

L'actionneur électromécanique 11, en particulier de type tubulaire, permet de mettre en rotation le tube d'enroulement 4 autour d'un axe de rotation X, de sorte à déplacer, en particulier dérouler ou enrouler, l'écran 2 du dispositif d'occultation 3.

Dans un état monté du dispositif d'occultation 3, l'actionneur électromécanique 11 est inséré dans le tube d'enroulement 4.

De manière connue, le volet roulant, qui forme le dispositif d'occultation 3, comporte un tablier comprenant des lames horizontales articulées les unes aux autres, formant l'écran 2 du volet roulant 3, et guidées par deux coulisses latérales 6. Ces lames sont jointives lorsque le tablier 2 du volet roulant 3 atteint sa position basse déroulée.

Dans le cas d'un volet roulant, la position haute enroulée correspond à la mise en appui d'une lame d'extrémité finale 8, par exemple en forme de L, du tablier 2 du volet roulant 3 contre un bord d'un coffre 9 du volet roulant 3 ou à l'arrêt de la lame d'extrémité finale 8 dans une position de fin de course haute programmée. En outre, la position basse déroulée correspond à la mise en appui de la lame d'extrémité finale 8 du tablier 2 du volet roulant 3 contre un seuil 7 de l'ouverture 1 ou à l'arrêt de la lame d'extrémité finale 8 dans une position de fin de course basse programmée.

Ici, l'écran 2 est configuré pour être déplacé, au moyen du dispositif d'entraînement motorisé 5, en particulier de l'actionneur électromécanique 11, entre une position ouverte, correspondant à la position enroulée et pouvant également être appelée première position de fin de course ou position de fin de course haute FdCH, et une position fermée, correspondant à la position déroulée et pouvant également être appelée deuxième position de fin de course ou position de fin de course basse FdCB.

Ainsi, l'actionneur électromécanique 11 est configuré pour entraîner, autrement dit entraîne, en déplacement l'écran 2, entre la première position de fin de course FdCH et la deuxième position de fin de course FdCB, et inversement, en vis-à-vis de la fenêtre 40, en particulier de la vitre 42.

Ici, l'écran 2 est disposé à l'extérieur du bâtiment.

En variante, l'écran 2 est disposé à l'intérieur du bâtiment.

La première lame du volet roulant 3, opposée à la lame d'extrémité finale 8, est reliée au tube d'enroulement 4 au moyen d'au moins une articulation 10, en particulier une pièce d'attache en forme de bande.

Le tube d'enroulement 4 est disposé à l'intérieur du coffre 9 du volet roulant 3. Le tablier 2 du volet roulant 3 s'enroule et se déroule autour du tube d'enroulement 4 et est logé au moins en partie à l'intérieur du coffre 9.

De manière générale, le coffre 9 est disposé au-dessus de l'ouverture 1, ou encore en partie supérieure de l'ouverture 1.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée, en liaison filaire ou non filaire, avec l'unité de commande centrale 13.

Avantageusement, l'unité de commande centrale 13 peut piloter l'unité de commande locale 12, ainsi que d'autres unités de commande locales similaires et réparties dans le bâtiment.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12 ou l'unité de commande centrale 13.

L'installation 100 comprend soit l'unité de commande locale 12, soit l'unité de commande centrale 13, soit l'unité de commande locale 12 et l'unité de commande centrale 13.

On décrit à présent, plus en détail et en référence à la figure 3, le dispositif d'entraînement motorisé 5, y compris l'actionneur électromécanique 11, appartenant à l'installation 100 des figures 1 et 2.

L'actionneur électromécanique 11 comprend au moins un moteur électrique 16.

Avantageusement, le moteur électrique 16 comprend un rotor et un stator, non représentés et positionnés de manière coaxiale autour de l'axe de rotation X du tube d'enroulement 4 en configuration montée du dispositif d'entraînement motorisé 5.

Ici, le moteur électrique 16 peut être de type sans balais à commutation électronique, appelé également « BLDC » (acronyme du terme anglo-saxon BrushLess Direct Current) ou « synchrone à aimants permanents », ou du type à courant continu.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11 et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Les moyens de commande de l'actionneur électromécanique 11 comprennent des moyens matériels et/ou logiciels.

A titre d'exemple nullement limitatif, les moyens matériels peuvent comprendre au moins un microcontrôleur 31.

Ici, le dispositif d'entraînement motorisé 5 comprend, en outre, l'unité électronique de contrôle 15.

Avantageusement, l'unité électronique de contrôle 15 comprend, en outre, un premier module de communication 27, en particulier de réception d'ordres de commande, les ordres de commande étant émis par un émetteur d'ordres, tel que l'unité de commande locale 12 ou l'unité de commande centrale 13, ces ordres étant destinés à commander le dispositif d'entraînement motorisé 5.

Avantageusement, le premier module de communication 27 de l'unité électronique de contrôle 15 est de type sans fil. En particulier, le premier module de communication 27 est configuré pour recevoir des ordres de commande radioélectriques.

Avantageusement, le premier module de communication 27 peut également permettre la réception d'ordres de commande transmis par des moyens filaires.

Avantageusement, l'unité électronique de contrôle 15, l'unité de commande locale 12 et/ou l'unité de commande centrale 13 peuvent être en communication avec une station météorologique, non représentée, disposée à l'intérieur du bâtiment ou déportée à l'extérieur du bâtiment, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment.

Avantageusement, l'unité électronique de contrôle 15, l'unité de commande locale 12 et/ou l'unité de commande centrale 13 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

L'unité électronique de contrôle 15 peut être commandée à partir de l'unité de commande locale 12 et/ou centrale 13. L'unité de commande locale 12 et/ou centrale 13 est pourvue d'un clavier de commande. Le clavier de commande de l'unité de commande locale 12 ou centrale 13 comprend un ou plusieurs éléments de sélection 14 et, éventuellement, un ou plusieurs éléments d'affichage 34.

A titre d'exemples nullement limitatifs, les éléments de sélection peuvent comprendre des boutons poussoirs et/ou des touches sensitives. Les éléments d'affichage peuvent comprendre des diodes électroluminescentes et/ou un afficheur, par exemple LCD (acronyme du terme anglo-saxon « Liquid Crystal Display ») ou TFT (acronyme du terme anglo-saxon « Thin Film Transistor »). Les éléments de sélection et d'affichage peuvent être également réalisés au moyen d'un écran tactile.

Avantageusement, l'unité de commande locale 12 et/ou centrale 13 comprend au moins un deuxième module de communication 36.

Ainsi, le deuxième module de communication 36 de l'unité de commande locale 12 ou centrale 13 est configuré pour émettre, autrement dit émet, des ordres de commande, en particulier par des moyens sans fil, par exemple radioélectriques, ou par des moyens filaires.

En outre, le deuxième module de communication 36 de l'unité de commande locale 12 ou centrale 13 peut également être configuré pour recevoir, autrement dit reçoit, des ordres de commande, en particulier par l'intermédiaire des mêmes moyens.

Avantageusement, le deuxième module de communication 36 de l'unité de commande locale 12 ou centrale 13 est configuré pour communiquer, autrement dit communique, avec le premier module de communication 27 de l'unité électronique de contrôle 15.

Ainsi, le deuxième module de communication 36 de l'unité de commande locale 12 ou centrale 13 échange des ordres de commande avec le premier module de communication 27 de l'unité électronique de contrôle 15, soit de manière monodirectionnelle, soit de manière bidirectionnelle.

Avantageusement, l'unité de commande locale 12 est un point de commande, pouvant être fixe ou nomade. Un point de commande fixe peut être un boîtier de commande destiné à être fixé sur une façade d'un mur du bâtiment ou sur une face du cadre dormant 41 de la fenêtre 40 ou d'une porte. Un point de commande nomade peut être une télécommande, un téléphone intelligent ou une tablette.

Avantageusement, l'unité de commande locale 12 et/ou centrale 13 comprend, en outre, un contrôleur 35.

Le dispositif d'entraînement motorisé 5, en particulier l'unité électronique de contrôle 15, est, de préférence, configuré pour exécuter des ordres de commande de déplacement, notamment de fermeture ainsi que d'ouverture, de l'écran 2 du dispositif d'occultation 3. Ces ordres de commande peuvent être émis, notamment, par l'unité de commande locale 12 ou par l'unité de commande centrale 13.

Le dispositif d'entraînement motorisé 5 peut être contrôlé par l'utilisateur, par exemple par la réception d'un ordre de commande correspondant à un appui sur le ou l'un des éléments de sélection 14 de l'unité de commande locale 12 ou centrale 13.

Le dispositif d'entraînement motorisé 5 peut également être contrôlé automatiquement, par exemple par la réception d'un ordre de commande correspondant à au moins un signal provenant d'au moins un capteur 43 et/ou à un signal provenant d'une horloge, non représentée, de l'unité électronique de contrôle 15, en particulier du microcontrôleur 31. Le capteur 43 et/ou l'horloge peuvent être intégrés, en variante, non représentée, à l'unité de commande locale 12 ou à l'unité de commande centrale 13.

Avantageusement, l'actionneur électromécanique 11 comprend, en outre, un carter 17, en particulier tubulaire. Le moteur électrique 16 est monté à l'intérieur du carter 17, en particulier dans une configuration assemblée de l'actionneur électromécanique 11.

Le carter 17 est creux. Le carter 17 comprend une première extrémité 17a et une deuxième extrémité 17b. La deuxième extrémité 17b est opposée à la première extrémité 17a.

Avantageusement, l'actionneur électromécanique 11 comprend, en outre, une couronne 30.

La couronne 30 est disposée, autrement dit est configurée pour être disposée, au voisinage de la première extrémité 17a du carter 17, en particulier dans la configuration assemblée de l'actionneur électromécanique 11.

Ici, le carter 17 de l'actionneur électromécanique 11 est de forme cylindrique, notamment de révolution autour de l'axe de rotation X, et est ouvert à chacune de ses extrémités 17a, 17b.

Avantageusement, le carter 17 est un tube présentant une section circulaire.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, l'actionneur électromécanique 11 comprend, en outre, un arbre de sortie 20.

Avantageusement, l'actionneur électromécanique 11 comprend, en outre, un réducteur 19.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend, en outre, un frein 29.

A titre d'exemples nullement limitatifs, le frein 29 peut être un frein à ressort, un frein à came, un frein magnétique ou un frein électromagnétique.

Ici et comme visible à la figure 3, en particulier dans la configuration assemblée de l'actionneur électromécanique 11, le frein 29 est configuré pour être disposé, autrement dit est disposé, entre le moteur électrique 16 et le réducteur 19, c'est-à-dire à la sortie du moteur électrique 16.

En variante, non représentée, en particulier dans la configuration assemblée de l'actionneur électromécanique 11, le frein 29 est configuré pour être disposé, autrement dit est disposé :
- entre l'unité électronique de contrôle 15 et le moteur électrique 16, autrement dit à l'entrée du moteur électrique 16, ou
- entre le réducteur 19 et l'arbre de sortie 20, autrement dit à la sortie du réducteur 19, ou
- entre deux étages de réduction du réducteur 19.

Avantageusement, le réducteur 19 et, éventuellement, le frein 29 sont montés à l'intérieur du carter 17 de l'actionneur électromécanique 11, en particulier dans la configuration assemblée de l'actionneur électromécanique 11.

Avantageusement, l'actionneur électromécanique 11 et, plus particulièrement, l'unité électronique de contrôle 15 comprend, en outre, un dispositif de détection d'obstacle et de fins de course, non représenté, lors de l'enroulement de l'écran 2 et lors du déroulement de cet écran 2, pouvant être mécanique ou électronique.

Avantageusement, le dispositif de détection d'obstacle et de fins de course est mis en oeuvre au moyen du microcontrôleur 31 de l'unité électronique de contrôle 15 et, en particulier, au moyen d'un algorithme mis en oeuvre par ce microcontrôleur 31.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen de la couronne 30. La couronne 30 permet ainsi de réaliser un palier. La deuxième liaison pivot, non représentée, est réalisée au niveau d'une deuxième extrémité du tube d'enroulement 4, opposée à la première extrémité.

La couronne 30 forme, autrement dit est configurée pour former ou constituer, un palier de guidage en rotation du tube d'enroulement 4, autour du carter 17 de l'actionneur électromécanique 11, en particulier dans une configuration assemblée du dispositif d'entraînement motorisé 5 et, par conséquent, du dispositif d'occultation 3.

Avantageusement, l'actionneur électromécanique 11 comprend, en outre, un support de couple 21, pouvant également être appelé « tête d'actionneur » ou « point fixe ».

Ici, le support de couple 21 est disposé au niveau de la première extrémité 17a du carter 17 de l'actionneur électromécanique 11, en particulier dans la configuration assemblée de l'actionneur électromécanique 11.

Le support de couple 21 permet de reprendre les efforts exercés par l'actionneur électromécanique 11, en particulier le couple exercé par l'actionneur électromécanique 11, par rapport à la structure du bâtiment. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment.

Ainsi, le support de couple 21 de l'actionneur électromécanique 11 permet de fixer l'actionneur électromécanique 11 sur un bâti 23, en particulier à une joue du coffre 9.

Avantageusement, le support de couple 21 est en saillie au niveau de la première extrémité 17a du carter 17 de l'actionneur électromécanique 11.

Avantageusement, le support de couple 21 obture, autrement dit est configuré pour obturer, la première extrémité 17a du carter 17, en particulier dans la configuration assemblée de l'actionneur électromécanique 11.

Par ailleurs, le support de couple 21 de l'actionneur électromécanique 11 peut permettre de supporter au moins une partie de l'unité électronique de contrôle 15.

Avantageusement, le support de couple 21 est fixé au carter 17 au moyen d'un ou plusieurs éléments de fixation, non représentés, en particulier dans la configuration assemblée de l'actionneur électromécanique 11. Le ou les éléments de fixation peuvent être, notamment, des bossages, des vis de fixation, des éléments de fixation par encliquetage élastique, des rainures emmanchées dans des échancrures ou une combinaison de ces différents éléments de fixation.

Ici et comme illustré à la figure 3, la couronne 30 est disposée ou insérée, autrement dit est configurée pour être disposée ou insérée, autour d'une partie du carter 17, en particulier dans la configuration assemblée de l'actionneur électromécanique 11. Dans ce cas, la couronne 30 est montée libre en rotation autour du carter 17.

En variante, non représentée, la couronne 30 est disposée ou insérée, autrement dit est configurée pour être disposée ou insérée, autour du support de couple 21, en particulier dans la configuration assemblée de l'actionneur électromécanique 11. Dans ce cas, la couronne 30 est montée libre en rotation autour du support de couple 21.

Dans une autre variante, non représentée, la couronne 30 est disposée ou insérée, autrement dit est configurée pour être disposée ou insérée, d'une part, autour du support de couple 21 et, d'autre part, autour d'une partie du carter 17, en particulier dans la configuration assemblée de l'actionneur électromécanique 11. Dans un tel cas, la couronne 30 peut être montée libre en rotation, d'une part, autour du support de couple 21 et, d'autre part, autour du carter 17.

Avantageusement, l'unité électronique de contrôle 15 peut être alimentée en énergie électrique au moyen d'un câble d'alimentation électrique 18.

Ici et tel qu'illustré à la figure 3, l'unité électronique de contrôle 15 est ainsi disposée, autrement dit est intégrée, à l'intérieur du carter 17 de l'actionneur électromécanique 11.

En variante, non représentée, l'unité électronique de contrôle 15 est disposée à l'extérieur du carter 17 de l'actionneur électromécanique 11 et, en particulier, montée sur le coffre 9 ou dans le support de couple 21.

Avantageusement, le support de couple 21 peut comprendre au moins un bouton, non représenté.

Ce ou ces boutons peuvent permettre de réaliser un réglage de l'actionneur électromécanique 11 au travers d'un ou plusieurs modes de configuration, d'appairer avec l'actionneur électromécanique 11 une ou plusieurs unités de commande 12, 13, de réinitialiser un ou plusieurs paramètres, pouvant être, par exemple, une position de fin de course, de réinitialiser la ou les unités de commande 12, 13 appairées ou encore de commander le déplacement de l'écran 2.

Avantageusement, le support de couple 21 peut comprendre au moins un dispositif d'affichage, non représenté, de sorte à permettre une indication visuelle d'un paramètre de fonctionnement du dispositif d'entraînement motorisé 5.

Avantageusement, le dispositif d'affichage comprend au moins une source d'éclairage, non représentée, en particulier une diode électroluminescente.

Cette ou ces sources d'éclairage sont montées sur une carte électronique de l'unité électronique de contrôle 15 et, éventuellement, un capot transparent ou translucide et/ou un guide de lumière, pour permettre le passage de la lumière émise par la ou chacune des sources d'éclairage.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à la deuxième extrémité 17b du carter 17 opposée à la première extrémité 17a.

Avantageusement, l'arbre de sortie 20 de l'actionneur électromécanique 11 est configuré pour entraîner en rotation un élément de liaison 22. Cet élément de liaison 22 est relié au tube d'enroulement 4, en particulier dans la configuration assemblée du dispositif d'occultation 3. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison 22.

Ainsi, le tube d'enroulement 4 entraîne en rotation l'écran 2 du dispositif d'occultation 3, de sorte à ouvrir ou fermer l'ouverture 1.

Le dispositif d'occultation 3 et, plus particulièrement, le dispositif d'entraînement motorisé 5 comprend, en outre, un dispositif d'alimentation en énergie électrique 26, visible à la figure 2. L'actionneur électromécanique 11 est relié électriquement au dispositif d'alimentation en énergie électrique 26.

Le dispositif d'alimentation en énergie électrique 26 comprend au moins une batterie 24, de type rechargeable, et au moins un panneau photovoltaïque 25.

Le dispositif d'alimentation en énergie électrique 26 est configuré pour alimenter, autrement dit alimente, en énergie électrique l'actionneur électromécanique 11 et, plus particulièrement, l'unité électronique de contrôle 15 et le moteur électrique 16.

Ainsi, le dispositif d'alimentation en énergie électrique 26 permet d'alimenter en énergie électrique l'actionneur électromécanique 11, sans être lui-même relié électriquement à un réseau d'alimentation électrique du secteur.

Ici, le panneau photovoltaïque 25 est relié électriquement à la batterie 24.

L'actionneur électromécanique 11 est relié électriquement au dispositif d'alimentation en énergie électrique 26 et, plus particulièrement, à la batterie 24, en particulier au moyen du câble d'alimentation électrique 18.

Avantageusement, la batterie 24 est configurée pour alimenter, autrement dit alimente, en énergie électrique l'actionneur électromécanique 11, en particulier l'unité électronique de contrôle 15 et le moteur électrique 16. En outre, la batterie 24 est configurée pour être alimentée, autrement dit est alimentée, en énergie électrique par le panneau photovoltaïque 25.

Ainsi, le rechargement de la batterie 24 est mis en oeuvre par énergie solaire, au moyen du panneau photovoltaïque 25.

Avantageusement, la batterie 24 peut être disposée au niveau du coffre 9 du dispositif d'occultation 3.

Ici et comme illustré à la figure 2, la batterie 24 est disposée à l'extérieur du coffre 9.

En variante, non représentée, la batterie 24 peut être disposée à l'intérieur du coffre 9, à l'intérieur du tube d'enroulement 4 tout en étant à l'extérieur du carter 17, ou à l'intérieur du carter 17, en particulier dans la configuration assemblée de l'actionneur électromécanique 11. Dans ce dernier cas, l'actionneur électromécanique 11 comprend la batterie 24.

Lorsque le support de couple 21 comprend un dispositif d'affichage, le paramètre de fonctionnement que ce dispositif d'affichage permet de visualiser est avantageusement un état de charge de la batterie 24.

Ici, l'actionneur électromécanique 11 comprend le câble d'alimentation électrique 18 permettant son alimentation en énergie électrique, notamment l'alimentation électrique de l'unité électronique de contrôle 15 et l'alimentation électrique du moteur électrique 16, en particulier à partir de la batterie 24.

Ici et tel qu'illustré à la figure 3, la batterie 24 est reliée électriquement directement à l'unité électronique de contrôle 15, par le câble d'alimentation électrique 18.

Avantageusement, la batterie 24 comprend une pluralité d'éléments de stockage d'énergie 32, en particulier reliés électriquement en série. Les éléments de stockage d'énergie 32 de la batterie 24 peuvent être, notamment, des accumulateurs rechargeables ou encore des piles rechargeables.

Avantageusement, le panneau photovoltaïque 25 comprend au moins une cellule photovoltaïque, non représentée, et, plus particulièrement, une pluralité de cellules photovoltaïques.

Avantageusement, le dispositif d'entraînement motorisé 5, en particulier le panneau photovoltaïque 25 et l'unité électronique de contrôle 15, comprend des éléments de chargement configurés pour charger la batterie 24, à partir de l'énergie solaire récupérée par le panneau photovoltaïque 25. Dans ce cas, le courant circule entre les composants 15, 24 et 25 à travers une liaison filaire, non représentée, pouvant être distincte du câble d'alimentation en énergie électrique 18.

Ainsi, les éléments de chargement configurés pour charger la batterie 24, à partir de l'énergie solaire, permettent de convertir l'énergie solaire récupérée par le panneau photovoltaïque 25 en énergie électrique.

En variante ou en complément, le dispositif d'entraînement motorisé 5, en particulier l'actionneur électromécanique 11, est alimenté en énergie électrique au moyen de la batterie 24 ou à partir d'un réseau d'alimentation électrique du secteur, en particulier par le réseau alternatif commercial, notamment en fonction d'un état de charge de la batterie 24.

Ici et comme illustré à la figure 2, l'unité électronique de contrôle 15 comprend une seule carte électronique. En outre, la carte électronique est configurée pour contrôler le moteur électrique 16, pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Comme mentionné ci-dessus, les éléments de chargement de la batterie 24 peuvent être disposés au niveau de la carte électronique.

En variante, non représentée, l'unité électronique de contrôle 15 comprend une première carte électronique et une deuxième carte électronique. La première carte électronique est configurée pour contrôler, autrement dit contrôle, le moteur électrique 16. En outre, la deuxième carte électronique est configurée pour permettre la recharge de la batterie 24 et, éventuellement, accéder à des fonctions de paramétrage et/ou de configuration de l'actionneur électromécanique 11, au moyen d'éléments de sélection et, éventuellement, d'affichage, non représentés. Les éléments de chargement de la batterie 24 peuvent être disposés au niveau de la deuxième carte électronique.

Dans le cas où l'unité électronique de contrôle 15 comprend une première carte électronique et une deuxième carte électronique, non représentées, la première carte électronique de l'unité électronique de contrôle 15 peut être disposée à l'intérieur du carter 17 de l'actionneur électromécanique 11. En outre, la deuxième carte électronique peut être disposée à l'intérieur du support de couple 21 de l'actionneur électromécanique 11. Par ailleurs, le support de couple 21 peut comprendre un couvercle, non représenté. En outre, la deuxième carte électronique peut être disposée à l'intérieur d'un logement formé entre une partie du support de couple 21 et le couvercle.

L'installation 100 comprend, en outre, au moins un terminal mobile 33.

Ici, le terminal mobile 33 peut être l'unité de commande locale 12 et comprendre tout ou partie des éléments constituant celle-ci.

Préférentiellement, le terminal mobile 33 est un téléphone intelligent, également appelé « Smartphone » en anglais.

En variante, le terminal mobile 33 peut être une tablette tactile ou un outil de configuration.

Le terminal mobile 33 peut ainsi être tout appareil mobile configuré pour mettre en oeuvre un procédé de vérification de compatibilité du dispositif d'entraînement motorisé 5 du dispositif d'occultation 3 pour l'installation 100, tel que décrit par la suite.

Le terminal mobile 33 comprend au moins le contrôleur 35 et un appareil photographique 37, en particulier numérique.

Avantageusement, l'appareil photographique 37 du terminal mobile 33 est une caméra, en particulier numérique.

Avantageusement, l'appareil photographique 37 du terminal mobile 33 comprend un capteur d'image, non représenté.

Avantageusement, le capteur d'image de l'appareil photographique 37 du terminal mobile 33 est un capteur CCD (acronyme du terme anglo-saxon « Charged Couple Device »). En outre, le capteur d'image de l'appareil photographique 37 du terminal mobile 33 est configuré pour transformer des signaux lumineux en signaux électriques.

Avantageusement, le terminal mobile 33 comprend, en outre, un dispositif de détection d'orientation 38.

Avantageusement, le dispositif de détection d'orientation 38 du terminal mobile 33 comprend un gyroscope.

En variante, le dispositif de détection d'orientation 38 du terminal mobile 33 comprend un magnétomètre, pouvant être combiné avec un accéléromètre et/ou avec un gyroscope.

Le terminal mobile 33 comprend, en outre, un dispositif de positionnement 39, par exemple un dispositif de positionnement par satellites.

Ici, le terminal mobile 33 comprend le deuxième module de communication 36, tel que décrit précédemment en référence à l'unité de commande locale 12, de même que les éléments de sélection 14 et d'affichage 34.

Avantageusement, l'installation 100 comprend, en outre, un capteur d'ensoleillement 43, en particulier un unique capteur d'ensoleillement 43 pour une façade du bâtiment ou pour le bâtiment. En outre, l'unité électronique de contrôle 15 est configurée pour commander, autrement dit commande, l'actionneur électromécanique 11 ou, éventuellement, une pluralité d'actionneurs électromécaniques 11, en fonction d'au moins une valeur d'au moins une condition d'ensoleillement provenant du capteur d'ensoleillement 43.

En variante, l'unité électronique de contrôle 15 est configurée pour commander, autrement dit commande, l'actionneur électromécanique 11, en fonction d'au moins une valeur d'au moins une condition d'ensoleillement provenant du serveur 28.

Le terminal mobile 33 ou l'installation 100 comprennent tous les éléments matériels et/ou logiciels nécessaires à la mise en oeuvre du procédé de vérification de compatibilité objet de l'invention, tel que décrit par la suite. Les éléments peuvent inclure des modules logiciels.

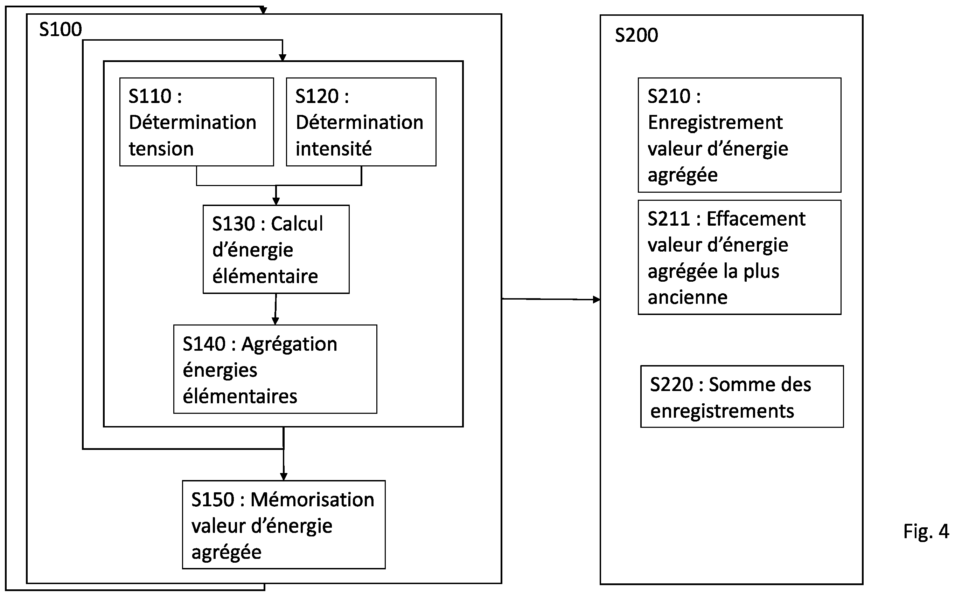

On décrit à présent, en référence aux figures 4 à 8, deux variantes d'un mode d'exécution d'un procédé de diagnostic du dispositif d'entraînement motorisé 5 pour dispositif d'occultation 3 de l'installation 100 de fermeture, d'occultation ou de protection solaire conforme à l'invention et représentée aux figures 1 à 3.

Le procédé de diagnostic est avantageusement mis en oeuvre par le dispositif d'entraînement motorisé 5 lui-même, notamment par l'actionneur électromécanique 11 et/ou par le dispositif d'alimentation en énergie électrique 26 et/ou par le terminal mobile 33 et/ou par une unité de commande 12, 13. Ainsi, le procédé de diagnostic peut être :
- mis en oeuvre au niveau d'un élément du dispositif d'entraînement, ou
- distribué entre plusieurs éléments du dispositif d'entraînement, différentes actions du procédé de diagnostic étant mises en oeuvre au niveau de différents éléments du dispositif d'entraînement, le résultat d'une ou plusieurs actions mises en oeuvre par un élément du dispositif d'entraînement étant transmis à un autre élément du dispositif d'entraînement.

Le procédé de diagnostic est avantageusement mis en oeuvre par une application, en particulier une application du terminal mobile 33.

L'application permet de vérifier l'état (état de santé) du panneau photovoltaïque. Cette application fonctionne à partir de ressources de calcul limitées. En effet, le procédé peut se résumer, comme il sera vu plus bas, à :
- effectuer des intégrations par rapport au temps d'une puissance électrique produite par le panneau photovoltaïque 25 (et éventuellement d'une puissance électrique consommée par le dispositif d'entraînement motorisé 5),
- retenir uniquement les données sur une période cible limitée et
- effectuer une comparaison pour obtenir un diagnostic, notamment un diagnostic généralisé dans le temps à partir des données retenues.

Le procédé de diagnostic comprend :
- une étape S100 de comptage de l'énergie électrique produite par le panneau photovoltaïque 25 pendant une période élémentaire, cette étape S100 étant itérée sur plusieurs périodes élémentaires successives, et
- une étape S200 de détermination de l'énergie électrique produite par le panneau photovoltaïque 25 durant une période cible égale à une somme de périodes élémentaires, notamment à une somme d'une succession de périodes élémentaires.

La période cible a de préférence :
- une durée courte, comprise entre 3 et 9 jours, par exemple une période d'environ 5 jours, ou
- une durée intermédiaire, comprise entre 10 jours et 31 jours, par exemple une période d'environ 25 jours, ou
- une durée importante, comprise entre 32 et 100 jours, par exemple d'environ 80 jours. Cette période cible est de préférence une période glissante, c'est-à-dire une période de n jours précédant le jour actuel (avec n un nombre entier).

L'étape de comptage S100 comprend avantageusement une détermination S130 :
- de la puissance électrique fournie par le panneau électrique pendant un intervalle de temps élémentaire, ou
- de l'énergie électrique fournie par le panneau électrique pendant cet intervalle de temps élémentaire.

Cette détermination de la puissance électrique ou de l'énergie électrique peut être effectuée en déterminant ou en mesurant ou en estimant les valeurs suivantes :
- la tension délivrée pendant l'intervalle de temps élémentaire (étape S110), et
- le courant délivré pendant l'intervalle de temps élémentaire (étape S120).

Ces valeurs peuvent être déterminées dans le dispositif d'alimentation en énergie électrique 26, notamment par une mémorisation et un traitement dans une unité logique de traitement du dispositif d'alimentation en énergie électrique 26.

Cette détermination S130 peut comprendre une multiplication des valeurs :
- de tension,
- de courant, et
- de durée de l'intervalle élémentaire
afin de déterminer une énergie électrique élémentaire délivrée pendant l'intervalle de temps élémentaire.

La durée de l'intervalle de temps élémentaire peut être de l'ordre de la seconde ou de quelques secondes (typiquement 10 s à 60 s) ou de l'ordre de la minute ou de quelques minutes (typiquement 1 min à 10 min).

L'étape S140 consiste à agréger les valeurs déterminées pendant les étape S130 sur des périodes élémentaires, une période élémentaire étant la somme des intervalles de temps élémentaires, et à calculer une somme de ces valeurs déterminées qui est une valeur d'énergie, dite valeur d'énergie agrégée.

La période élémentaire est en particulier égale à 24h.

Au cours d'une étape S150, on enregistre dans une première mémoire la valeur d'énergie agrégée déterminée à l'issue de la période élémentaire.

L'étape S200 de détermination de l'énergie électrique produite par le panneau photovoltaïque 25 durant la période cible comprend :
- une étape S210 dans laquelle on enregistre dans une deuxième mémoire la valeur d'énergie agrégée déterminée au cours de l'étape S150 et une étape S211 où on efface le plus ancien enregistrement de valeur d'énergie agrégée se trouvant en mémoire (avantageusement, le nouvel enregistrement écrase le plus ancien enregistrement), et
- une étape S220 dans laquelle on calcule la somme des enregistrements de valeurs d'énergie agrégée déterminée se trouvant en deuxième mémoire, la somme des durées des périodes élémentaires étant égale à la durée de la période cible, la somme des valeurs d'énergie agrégée étant égale à l'énergie électrique produite par le panneau photovoltaïque 25 durant la période cible. Cette deuxième mémoire a avantageusement un nombre d'emplacements d'enregistrements suffisant, au moins égal au nombre de périodes élémentaires de temps formant la période cible.

La première mémoire contient donc un historique des valeurs d'énergie agrégées déterminées à l'issue des différentes périodes élémentaires, la première mémoire contient donc des données historisées, soit un historique de valeurs. La première mémoire contient les valeurs agrégées qui sont les plus récentes disponibles.

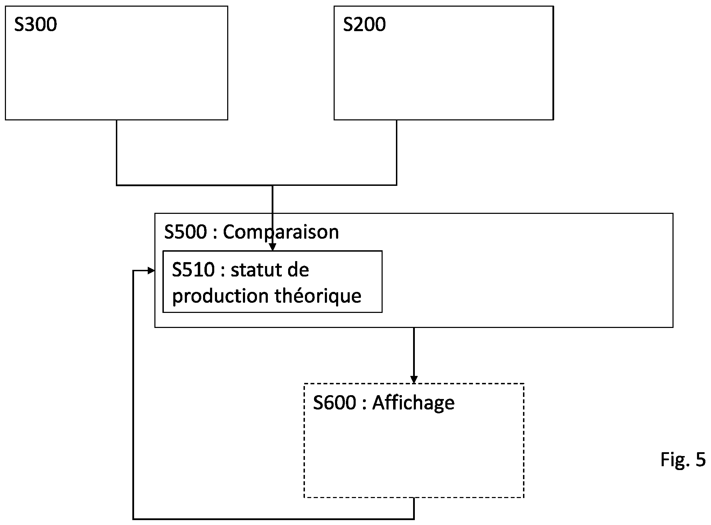

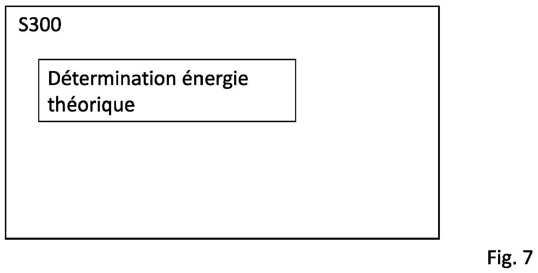

Puis, dans une étape S500 d'une première variante du mode de réalisation du procédé (variante représentée aux figures 5 et 7), on compare :
- la valeur d'énergie électrique produite par le panneau photovoltaïque 25 durant la période cible (obtenue à l'issue de l'étape S200), à
- au moins une valeur seuil d'énergie associée à la période cible et déterminée lors d'une étape S300.

Dans la première variante de réalisation, dans l'étape S300, la valeur seuil d'énergie associée à la période cible est une valeur théorique correspondant à une consommation théorique du dispositif d'entraînement motorisé 5 durant la période cible.

Cette valeur théorique peut être fixée dans une étape S300, pour toute la durée de vie de l'installation ou pour une durée limitée. Dans ce cas, la valeur théorique est mise à jour périodiquement. La valeur théorique est déterminée en fonction des caractéristiques de l'installation 100, en particulier en fonction de :
- la nature ou la fonction de l'écran, et/ou
- la masse de l'écran, et/ou
- les dimensions de l'écran, et/ou
- la puissance de l'actionneur électromécanique, et/ou
- la vétusté de l'installation.

Plusieurs valeurs théoriques peuvent être déterminées, comme :
- une consommation d'énergie électrique théorique haute du dispositif d'entraînement motorisé 5 déterminée en faisant une hypothèse de consommation élevée d'énergie électrique, et/ou
- une consommation d'énergie électrique théorique nominale du dispositif d'entraînement motorisé 5 déterminée en faisant une hypothèse de consommation nominale d'énergie électrique, et/ou
- une consommation d'énergie électrique théorique basse du dispositif d'entraînement motorisé 5 déterminée en faisant une hypothèse de consommation basse d'énergie électrique.

La comparaison des résultats des étapes S200 et S300 permet de fournir, dans une étape S510, un indicateur de production théorique.

Puis, dans une étape S600, dans la première variante d'exécution, en fonction du résultat de l'étape de comparaison S500, le procédé communique, notamment communique par affichage, une information de production relative d'énergie électrique. Cette information est de préférence une information qualitative, comme par exemple les informations qui suivent :
- bonne : si la production d'énergie électrique est supérieure à la consommation d'énergie électrique théorique du dispositif d'entraînement motorisé 5 déterminée en faisant une hypothèse de consommation élevée d'énergie électrique,
- moyenne : si la production d'énergie électrique est supérieure à la consommation d'énergie électrique théorique du dispositif d'entraînement motorisé 5 déterminée en faisant une hypothèse de consommation nominale d'énergie électrique,
- faible : si la production d'énergie électrique est inférieure à la consommation d'énergie électrique théorique du dispositif d'entraînement motorisé 5 déterminée en faisant une hypothèse de consommation nominale d'énergie électrique,
- insuffisante : si la production d'énergie électrique est inférieure à la consommation d'énergie électrique théorique du dispositif d'entraînement motorisé 5 déterminée en faisant une hypothèse de consommation basse d'énergie électrique.

Les étapes S100, S200 peuvent être mises en oeuvre en boucle sur chaque intervalle ou période correspondants. A l'issue de l'étape S600, le procédé boucle ensuite sur une nouvelle étape S500, qui est mise en oeuvre avec les valeurs actualisées issues des étapes S100, S200 et S300.

Si, après mise en oeuvre des recommandations et après échéance d'une nouvelle période cible, l'information de production relative demeure insuffisante, le procédé conclut que le panneau photovoltaïque est détérioré et émet une information signifiant cet état du panneau photovoltaïque. L'utilisateur ou l'installateur peut alors remplacer le panneau photovoltaïque.

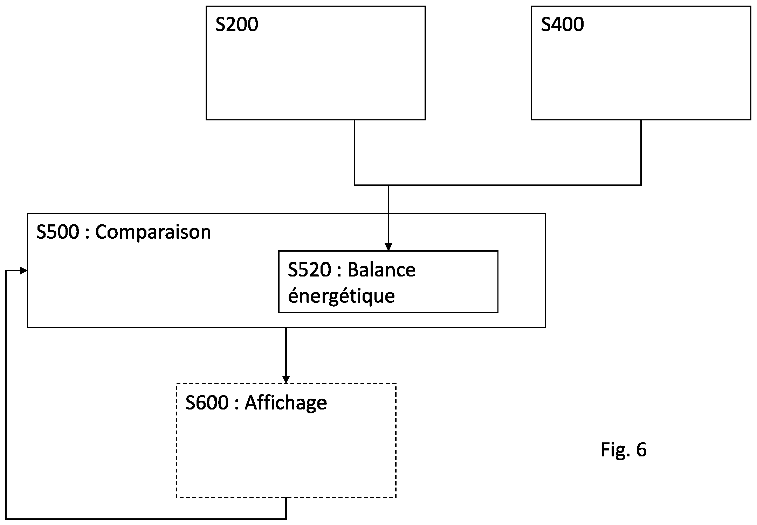

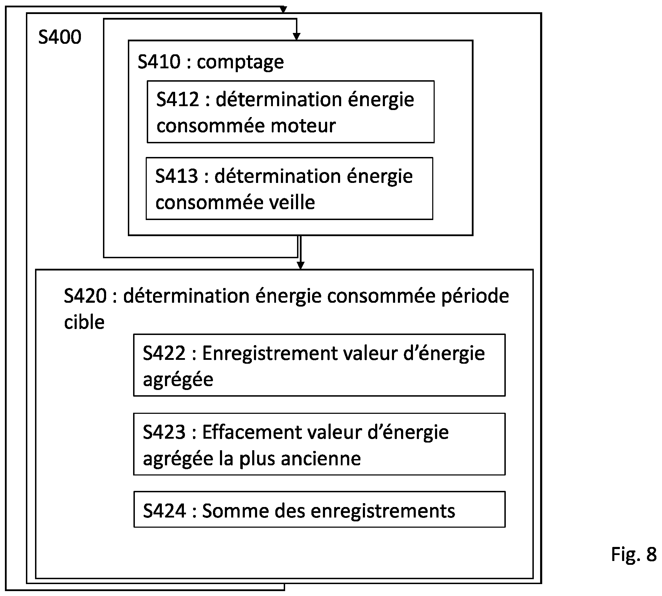

Dans une étape S500 d'une deuxième variante du mode de réalisation du procédé (variante représentée aux figures 6 et 8), on compare :
- la valeur d'énergie électrique produite par le panneau photovoltaïque 25 durant la période cible (obtenue à l'issue de l'étape S200), à
- au moins une valeur seuil d'énergie associée à la période cible et déterminée lors d'une étape S400.

Dans l'étape S400 de la deuxième variante, la valeur seuil d'énergie associée à la période cible est une valeur effective correspondant à la consommation effective du dispositif d'entraînement motorisé 5 durant la période cible.

Pour ce faire, le procédé de diagnostic comprend :
- une étape S410 qui est ici une étape de comptage de l'énergie électrique consommée par le dispositif d'entraînement motorisé 5, en particulier par l'actionneur électromagnétique 11, durant la période élémentaire, et
- une étape de détermination S420 de l'énergie électrique consommée par le dispositif d'entraînement motorisé 5, en particulier par l'actionneur électromagnétique 11, durant la période élémentaire.

L'étape de comptage S410 comprend avantageusement une détermination S412 :
- de la puissance électrique consommée par le dispositif d'entraînement motorisé 5 pendant la période élémentaire, ou
- de l'énergie électrique consommée par le dispositif d'entraînement motorisé 5 pendant la période élémentaire.

Cette détermination de la puissance électrique ou de l'énergie électrique peut être effectuée en déterminant ou en mesurant ou en estimant les valeurs suivantes :
- la tension et/ou le courant alimentant le dispositif d'entraînement motorisé 5 pendant les périodes d'alimentation du moteur sur une période cible.
L'étape de comptage S410 comprend également une étape S413 de détermination d'une valeur dite de consommation en veille pendant les périodes dans lesquelles le moteur n'est pas alimenté.

Ces valeurs peuvent être déterminées dans le dispositif d'alimentation en énergie électrique 26, notamment par un traitement dans une unité logique de traitement du dispositif d'alimentation en énergie électrique 26.

Cette détermination S412 peut comprendre une multiplication des valeurs :
- de tension d'alimentation,
- de courant consommé, et
- de durée des périodes d'alimentation du moteur
afin de déterminer une énergie électrique consommée pendant la période élémentaire.

L'étape S420 de détermination de l'énergie électrique consommée par le dispositif d'entraînement motorisé 5 durant la période cible comprend :
- une étape S422 dans laquelle on enregistre dans une troisième mémoire la valeur d'énergie déterminée lors de la dernière mise en oeuvre de l'étape S410 et une étape S423 où on efface le plus ancien enregistrement de valeur d'énergie se trouvant en mémoire (avantageusement, le nouvel enregistrement écrase le plus ancien enregistrement), et
- une étape S424 dans laquelle on calcule la somme des enregistrements de valeurs d'énergie se trouvant en troisième mémoire, la somme des durées des périodes élémentaires étant égale à la durée de la période cible, la somme des valeurs d'énergie étant égale à la valeur seuil d'énergie électrique consommée par le dispositif d'entraînement motorisé 5 durant la période cible. Cette troisième mémoire a avantageusement un nombre d'emplacements d'enregistrements déterminant la période cible comme le produit du nombre d'emplacements d'enregistrements par la durée d'une période élémentaire.

La comparaison des résultats des étapes S200 et S400 permet de fournir dans une étape S520 un indicateur de balance énergétique.

Dans l'étape S600, en fonction du résultat de l'étape de comparaison S500, le procédé communique notamment par affichage un indicateur de bilan d'énergie. L'indicateur est par exemple basé sur le rapport de :
- l'énergie produite par le panneau photovoltaïque pendant la période cible, sur
- l'énergie consommée par le dispositif d'entraînement motorisé 5 durant la période cible.

Si le rapport est inférieur à 1, le procédé peut comprendre une action de communication pour indiquer que la production d'énergie est insuffisante et/ou afficher des recommandations comme nettoyer le panneau photovoltaïque et/ou déplacer le panneau photovoltaïque.

Si le rapport est supérieur à 1, le procédé peut comprendre une action de communication pour indiquer que la production d'énergie est suffisante.

Les étapes S100, S200, S400 peuvent être mises en oeuvre en boucle sur chaque intervalle ou période correspondants. A l'issue de l'étape S600, le procédé boucle ensuite sur une nouvelle étape S500, qui est mise en oeuvre avec les valeurs actualisées issues des étapes S100, S200 et S400.

Si, après mise en oeuvre des recommandations et après échéance d'une nouvelle période cible, le rapport reste inférieur à 1, le procédé conclut que le panneau photovoltaïque est détérioré et émet une information signifiant cet état du panneau photovoltaïque. L'utilisateur ou l'installateur peut alors remplacer le panneau photovoltaïque.

Quelle que soit la variante d'exécution, dans l'étape S600, la communication peut comprendre, alternativement ou complémentairement à l'information qualitative, une information quantitative comme la valeur d'énergie électrique produite par le panneau photovoltaïque 25 durant la période cible et/ou une recommandation d'action pour améliorer l'indicateur de bilan et/ou une recommandation d'action pour augmenter l'énergie électrique produite par le panneau photovoltaïque 25 durant la période cible.

De préférence, l'étape S600 est mise en oeuvre à la demande de l'utilisateur ou de l'installateur. Sans demande de l'utilisateur ou de l'installateur, le procédé peut boucler sur une nouvelle étape S500, l'étape S600 étant alors facultative.

Quel que soit le mode d'exécution ou la variante, différents calculs peuvent être effectués, dont toute combinaison des calculs suivants sur la base de données historisées :
- calcul de l'énergie totale produite par le panneau photovoltaïque 25 sur une courte durée (par exemple 5 jours),
- calcul de l'énergie totale produite par le panneau photovoltaïque 25 sur une durée intermédiaire (par exemple 25 jours),
- calcul de l'énergie totale produite par le panneau photovoltaïque 25 sur une longue durée (par exemple 80 jours),
- calcul de l'énergie totale consommée par le dispositif d'entraînement motorisé 5 sur une durée intermédiaire (par exemple 25 jours),
- calcul de l'énergie totale consommée par le dispositif d'entraînement motorisé 5 sur une longue durée (par exemple 80 jours).

Les données stockées sur une période de courte durée correspondent à un historique court, les données stockées sur une période de durée intermédiaire correspondent à un historique intermédiaire, les données stockées sur une période de longue durée correspondent à un historique important.

L'utilisation d'un historique important (80 jours par exemple) est idéale en terme de fiabilité d'analyse. Par contre, elle nécessite d'avoir plus de données embarquées (ce qui impacte la conception et les besoins en ressources matérielles, en particulier les mémoires et ressources de calcul) et elle a le désavantage de ne pas être disponible tout de suite : il faut attendre 80 jours pour avoir accès à un tel historique et pour pouvoir en conséquence l'exploiter. De plus, l'utilisation d'un historique important augmente le risque de traiter et considérer des données faussée suite à des interventions sur l'installation (comme par exemple une recharge de batterie, un changement batterie).

L'utilisation d'un historique intermédiaire (25 jours par exemple) est intéressante car elle offre un bon compromis relativement aux paramètres qui suivent :
- fiabilité,
- délai de disponibilité et
- besoins en ressources matérielles.

L'utilisation d'un historique court (5 jours par exemple) est intéressante car elle permet une bonne réactivité du dispositif aux paramètres ambiants actuels.

De préférence, on met en oeuvre les utilisations conjointes d'un historique important et d'un historique intermédiaire ou d'un historique court et d'un historique intermédiaire ou d'un historique court et d'un historique important ou des trois historiques court, intermédiaire et long.

En effet, plusieurs stratégies peuvent exploiter différentes situations mentionnées ci-dessus.

La production sur une durée courte, dans l'exemple ci-après cinq jours pourrait être utilisée pour détecter rapidement un problème de panneau photovoltaïque qui ne produit plus du tout ou très peu :
- L'énergie produite sur cinq jours est inférieure à un seuil bas : on déduit que la production est inexistante les derniers jours. Il peut par exemple exister un problème de connexion ou d'occultation des cellules du panneau photovoltaïque 25.
- L'énergie produite sur cinq jours est supérieure à un seuil bas : on déduit que le panneau photovoltaïque 25 produit de l'énergie correctement.

La production sur une durée intermédiaire, dans l'exemple ci-après 25 jours, pourrait être utilisée pour évaluer la quantité produite sur le dernier mois glissant environ. Elle pourrait être qualifiée comme suit :
- Bonne : si la production est supérieure à une consommation théorique associée à une installation correspondant à une consommation défavorable ;
- Moyenne : si la production est supérieure à une consommation théorique associée à une installation correspondant à une consommation nominale ;
- Faible : si la production est inférieure à une consommation théorique associée à une installation correspondant à une consommation nominale.

La production sur une durée longue, dans l'exemple ci-après 80 jours, pourrait être utilisée pour évaluer la quantité produite sur le dernier trimestre glissant environ. Elle pourrait être qualifiée comme suit :
- Bonne : si la production est supérieure à une consommation théorique associée à une installation correspondant à une consommation défavorable ;
- Moyenne : si la production est supérieure à une consommation théorique associée à une installation correspondant à une consommation nominale ;
- Faible : si la production est inférieure à une consommation théorique associée à une installation correspondant à une consommation nominale.

L'analyse croisée de la production sur 25 jours et sur 80 jours permet de distinguer un problème lié à l'usage et/ou à la saison par rapport à un problème technique. Si l'indicateur de production sur 25 jours est faible alors que l'indicateur sur 80 jours est bon, il est possible de déduire avec une forte probabilité une baisse de production liée à une période de mauvais temps ou à une période hivernale, sans rapport avec un dysfonctionnement de l'installation.

Si l'indicateur de production sur 80 jours est mauvais, il y a potentiellement un problème lié au panneau (positionnement, propreté) ou un usage trop intensif, de manière globale. Il existe une forte probabilité que le problème persiste même sur une période où la météo serait plus favorable.

Quel que soit le mode d'exécution ou la variante, on peut calculer et utiliser un indicateur de balance énergétique produit par comparaison de l'énergie produite et de l'énergie consommée comme vu précédemment. De la même manière que vu précédemment pour les valeurs de production d'énergie, le calcul et l'utilisation peuvent être faits sur deux périodes cibles (par exemple 25 jours et 80 jours comme vu précédemment).

Là encore, l'analyse croisée des balances avec des historiques différents permet d'établir plus facilement l'origine d'un éventuel problème. Si la balance sur le long terme (80 jours) est mauvaise, l'intervention est normalement quasi-obligatoire pour éviter des problèmes de panne.

L'analyse croisée des balances énergétiques avec l'analyse de production théorique permet également d'affiner l'analyse et également de produire des alertes automatiques performantes pour anticiper les pannes.

## Revendications

1. Procédé de diagnostic d'un dispositif d'entraînement motorisé (5) pour un dispositif d'occultation (3) d'une installation (100) de fermeture, d'occultation ou de protection solaire, le dispositif d'entraînement motorisé (5) comprenant un actionneur électromécanique (11) et un dispositif d'alimentation en énergie électrique (26) incluant une batterie (24) et un panneau photovoltaïque (25), le procédé de diagnostic comprenant :
- une étape (S100) de comptage de l'énergie électrique produite par le panneau photovoltaïque (25) pendant une période élémentaire, cette étape étant itérée sur plusieurs périodes élémentaires successives, et
- une étape (S200) de détermination de l'énergie électrique produite par le panneau photovoltaïque (25) durant une période cible glissante constituée par une succession de périodes élémentaires.

2. Procédé de diagnostic selon la revendication précédente, **caractérisé en ce qu'**il comprend une première étape (S500) de comparaison de l'énergie électrique produite par le panneau photovoltaïque (25) durant la période cible, notamment une première étape (S500) de comparaison de l'énergie électrique produite par le panneau photovoltaïque (25) durant la période cible à une consommation théorique du dispositif d'entraînement motorisé (5), en particulier une première étape (S500) de comparaison de l'énergie électrique produite par le panneau photovoltaïque (25) durant la période cible à une consommation théorique du dispositif d'entraînement motorisé (5) durant la période cible.

3. Procédé de diagnostic selon la revendication précédente, **caractérisé en ce qu'**il comprend, en fonction du résultat de la première étape de comparaison, une communication (S600), notamment un affichage, d'une information de production d'énergie électrique.

4. Procédé de diagnostic selon l'une des revendications précédentes, **caractérisé en ce qu'**il comprend :
- une étape (S410) de comptage de l'énergie électrique consommée par le dispositif d'entraînement motorisé (5) durant la période cible (25), et
- une étape (S420) de détermination de l'énergie électrique consommée par le dispositif d'entraînement motorisé (5) durant la période cible.

5. Procédé de diagnostic selon la revendication précédente, **caractérisé en ce qu'**il comprend une deuxième étape (S500) de comparaison de l'énergie électrique produite par le panneau photovoltaïque (25) durant la période cible à l'énergie électrique consommée par le dispositif d'entraînement motorisé (5) durant la période cible.

6. Procédé de diagnostic selon la revendication précédente, **caractérisé en ce qu'**il comprend, en fonction du résultat de la deuxième étape de comparaison, une communication (S600), notamment un affichage, d'un indicateur de bilan d'énergie et/ou d'une recommandation d'action pour améliorer l'indicateur de bilan.

7. Procédé de diagnostic selon la revendication précédente, **caractérisé en ce que** la période cible a :
- une durée courte, comprise entre 3 et 9 jours, par exemple une période d'environ 5 jours, ou
- une durée intermédiaire, comprise entre 10 jours et 31 jours, par exemple une période d'environ 25 jours, ou
- une durée importante, comprise entre 32 et 100 jours, par exemple d'environ 80 jours.

8. Procédé de diagnostic selon la revendication précédente, **caractérisé en ce qu'**il comprend une étape d'analyse combinée d'au moins deux résultats de la deuxième étape de comparaison pour différentes périodes cibles de durée courte, intermédiaire et/ou importante.

9. Dispositif d'entraînement motorisé (5) pour un dispositif d'occultation (3) d'une installation (100) de fermeture, d'occultation ou de protection solaire, comprenant des éléments matériels et/ou logiciels mettant en oeuvre le procédé selon l'une des revendications 1 à 8, notamment des éléments matériels et/ou logiciels conçus pour mettre en oeuvre le procédé selon l'une des revendications 1 à 8.

10. Produit programme d'ordinateur comprenant des instructions de code de programme enregistrées sur un support lisible par ordinateur pour mettre en oeuvre les étapes du procédé selon l'une quelconque des revendications 1 à 8 lorsque ledit programme fonctionne sur un ordinateur.

11. Support d'enregistrement de données, lisible par un ordinateur, sur lequel est enregistré un programme d'ordinateur comprenant des instructions de code de programme de mise en oeuvre du procédé selon l'une des revendications 1 à 8.
